Europäisches Patentamt

European Patent Office

Office européen des brevets

(11) Publication number: **0 001 161**
**A1**

## (12) EUROPEAN PATENT APPLICATION

(21) Application number: **78300301.5**

(22) Date of filing: **18.06.78**

(51) Int. Cl.²: **F 16 L 1/04**
**E 02 B 3/12**

(30) Priority: 24.06.77 GB 35392/77
30.03.78 GB 12359/78
06.04.78 GB 13228/78
07.04.78 GB 13745/78
17.04.78 GB 14925/78
18.04.78 GB 15104/78
20.04.78 GB 15590/78
25.04.78 GB 16173/78
06.05.78 GB 18309/78
30.05.78 GB 24575/77

(43) Date of publication of application:
21.03.79 Bulletin 79/6

(84) Designated contracting states:
BE DE FR NL SE

(71) Applicant: Larsen, Ole Fjord
Fasanvaenget 82 P.O.Box 604
DK-6700 Esbjerg(DK)

(72) Inventor: Larsen, Ole Fjord
Fasanvaenget 82 P.O.Box 604
DK-6700 Esbjerg(DK)

(74) Representative: Hartley, David
c/o Withers & Rogers 4 Dyer's Buildings Holborn
London, EC1N 2JT(GB)

(54) A system for protection of an installation on the floor of a body of water and a method of using it.

(57) A system for protection of an installation on the floor of a body of water from damage due to erosion, dragging ships' anchors and fishing gear.

A flexible mat covering the installation prevents underscouring of the installation. The edges of the mat resting on the floor are so thick and rigid that a dragging anchor or fishing gear hooking the edge will be carried over the installation by the roll of mat formed by the anchor or fishing gear. Elasticity of the mat and/or its edge causes the mat to roll back to resume its original configuration after the passage of the anchor or fishing gear.

Fig. 22

Croydon Printing Company Ltd.

EP 0 001 161 A1

A SYSTEM FOR PROTECTION OF AN INSTALLATION ON THE FLOOR OF A BODY OF
WATER AND A METHOD OF USING IT

The invention relates to a system for protection from damage due to scour,
ships' anchors, fishing gear, etc., of a pipeline, cable, foundation or
other installation on the floor of a body of water.

Various devices for protection against the eroding effect of waves and
currents,only, exist. An alternative system protecting against erosion,
anchors and fishing gear depends on hooking anchors being carried over the
installation by movable plate-like members which slide and/or turn over
top of the installation. Such plate-like members have to be strong enough
to carry the weight of the hooking anchor.

The principle of functioning of the present system as defined in Claim 1
implies that the hooking anchor winds or folds the protective mat together
and is carried over the installation by the rolled or folded mat. The required strength of the individual member of the system and thereby the cost
of fabrication is minimized. Furthermore, the present system is easier
to install.

For simplification the following description will refer to protection of a
submarine pipeline as a typical example. It is obvious that the system, or
at least its side portions, can be used for protection of any submarine
installation. In the description reference will be made to the drawing,
in which
Fig. 1 is a cross-section of a pipeline 1 protected by a mat the side portions of which slope all the way from center portion to edges,
Fig. 2 is a cross-section of a pipeline where the innermost portion of
each side portion of the protective mat slopes, whereas the outermost portion rests on and follows the contour of the floor,
Fig. 3 is a cross-section of a pipeline where the center portion of the
protective mat embraces the pipeline, whereas the side portions rest on
the floor,

Fig. 4 is a cross-section of a pipeline protected by a mat consisting of two layers of sheet material forming a bag filled with sediment or other fill material,

Fig. 5 shows the same as Fig. 4, but the bag is here supplemented with horizontal portions of mat of blocks,

Fig. 6 is a longitudinal side view of a tube forming the edge of the mat,

Fig. 7 is a cross-section taken along the line I-I in Fig. 6,

Figs. 8-10 are alternative cross-sections perpendicular to the pipeline of a mat of sheet material, with longitudinally extending notches in its upper surface, channels in its upper half, and slits in its underside, respectively,

Figs. 11-16 are cross-sections perpendicular to the pipeline of alternative shapes and interconnections of blocks forming the protective mat,

Figs. 17 and 18 are alternative longitudinal sections along the line II-II in Fig. 16 and show two alternative couplings in the joints between blocks forming a mat,

Fig. 19 is a plan view of a mat consisting of ball-shaped blocks,

Fig. 20 is a plan view of a mat consisting of double-cone-shaped blocks,

Fig. 21 is a cross-section along the line III-III of Fig. 19 or IV-IV of Fig. 20,

Fig. 22 is a cross-section perpendicular to the pipeline of a preferred embodiment of the invention,

Fig. 23 is a cross-section perpendicular to the pipeline of a mat consisting of scrapped tyres,

Fig. 24 is a cross-section of a mat wound into parallel rolls resting on the pipeline,

Fig. 25 is a side view of an arrangement for laying the mat,

Fig. 26 is a cross-section along the line V-V in Fig. 25.

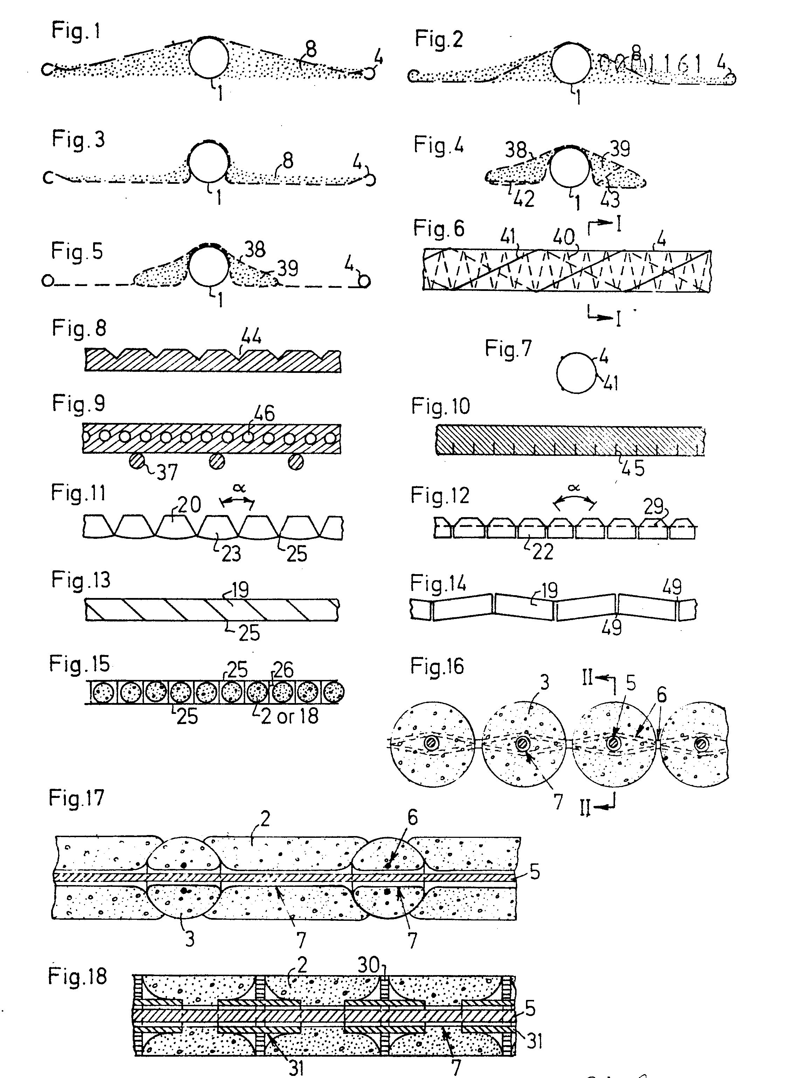

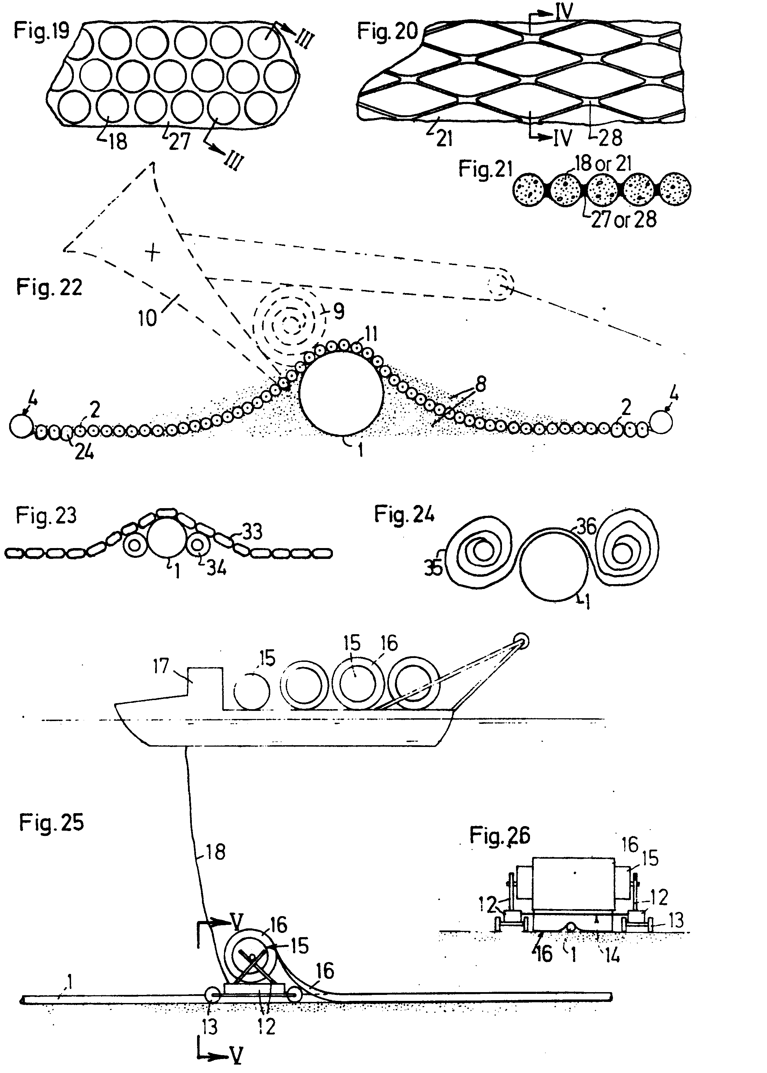

Depending on weight distribution in the mat, and sediment transport conditions at the installation site, the protective mat in principle may assume the three different configurations shown in Figs. 1-3..
The configurations shown in Figs. 1-2 are favourable in areas with sediment transport. If the sloping portions of the mat 16 are impermeable enough to conduct the current over top of the pipeline 1, a deposition of sediment 8 will take place underneath and on top of the mat, Figs. 1,2,3. The roll of mat 9 formed by a hooking anchor 10, Fig. 22, therefore will roll upwards on top of the deposition. Furthermore, the sediment on top of the mat will increase the diameter of the roll 9. For both reasons a smaller width of the mat is needed to obtain a certain roll diameter in sea bottom areas with sediment transport than in areas without such transport.

If the mat is not anchored in the bottom, the configuration shown in Fig. 1 requires that the edge portions of the mat are much heavier than the sloping portions.

In areas without sediment transport, designs of the mat as shown in Figs. 4 and 5 are appropriate. The weight of the fill material 39 in the bag 38 may also be desirable, if the protective system also is to substitute the weight coating of a pipeline.

The design of the mat may be based on 4 different provisions:

a) In particular in areas without sediment transport,the width and thickness of the mat are so large that the diameter of the rolled or folded mat formed by the largest anchor hooking the edge, before passage of the pipeline,has gained enough to make the anchor slip over the roll of mat, and the elasticity and/or the weight of the mat will make this roll back to its original position.

b) In particular in areas with sediment transport, the width and thickness of the mat are large enough to make the anchor slip over the roll of mat before it arrives at the opposite edge of the mat.

c) In particular in areas with sediment transport, the strength of the mat in its longitudinal direction may be so low that the roll of mat breaks when the anchor has passed over the pipeline, so that the anchor can move on, without passing over the roll of mat.

d) In particular in areas with sediment transport, the mat may be sectioned into shorter, overlapping lengths along the pipeline. After having passed over the pipeline, the anchor will take a section of mat away.

A hooking anchor's initiation of a rolling displacement of the edge of mat depends on a certain rigidity of the edge. The horizontal drag of a hooking anchor or fishing gear should be spread over a certain length of mat. Otherwise the anchor will wedge into the edge of the mat. Furthermore, the geometrical and frictional resistance should be so little, that a positive rotational moment as to the lower side of the edge results. To prevent the edge from getting caught in the corner between shaft and flukes of the anchor, the edge should also have a certain minimum thickness.

These requirements may be fulfilled by bending the edge around, either upwards, Fig.2, or downwards, Fig.3, or all the way round to form a closed

0001161

tube, Fig.1. Alternatively, a separate tube 4 may be attached to the edge, Figs. 5-7 and 22. The tube may be filled with for instance sediment, or balls of concrete, or one or more longitudinally extending stays.

The tube must have a certain flexibility and elongability to fulfill its purpose.To carry the weight of at least the dragging anchor chain,it must at the same time have a certain radial strength.

One solution to these requirements is a tube made of neoprene reinforced with at least one spiral-shaped wire fabricated forinstance of steel, Figs. 6-7. To provide bearing capacity, one of the spirals, 40, may have a low pitch. To provide rigidness, another spiral, 41, may have a higher pitch. Both spirals allow for prolongation of the tube in case an anchor hooks it.

Longitudinal members, e.g. the spiral 41,may project above the surface of the tube, to provide a foothold for the anchor chain, so that it can rotate the tube.

If the tube 4 consists of rigid material, e.g. concrete, steel, aluminium and/or plastic, the tube may be sectioned to obtain flexibility and elongability. The joints between adjacent sections may be telescopic to provide continuity.

The tube may be perforated so as to minimize the hydraulic resistance and to become filled by the natural sediment transport. It may even consist of oppositely spiraled wires forming mesh of for instance steel coated with plastic, neoprene or the like.

To spread the horizontal drag force over a length of the mat, the mat may contain one or more longitudinally extending parallel stays, solid or hollow, at least along the edges of the mat. Although rigidness of the edge portion is required to prevent a hooking anchor from wedging into the edge, the formation of a roll of mat implies a certain longitudinal prolongability of the mat, at least of its edge portions. From the edge towards the pipeline the prolongability may gradually decrease. If the mat contains stays made of unelastic material, they may be sectioned and staggered in channels in the mat, so that elongation of the sheet is not prevented by the stays. The length of the sectioning may gradually decrease toward the edges of the mat.

To increase the ability of the mat to roll back to its original position, after a hooking anchor has passed over it, the mat in its longitudinal and/or transverse directions may be made of elastic material.

A decrease of the elasticity toward the pipeline may be obtained by vary-

BAD ORIGINAL

5

ing the elasticity and/or kind of material and/or thickness of the mat, either continuously from edge to centerline or by way of abrupt changes of these proporties.

To minimize the lifting forces of the current, the mat may contain perforations and/or openings of various shapes and sizes to neutralize the difference of hydraulic pressures between the two sides of the mat. The holes should be located and/or shaped so that anchors and fishing gear will not catch hold of them. In areas with sediment transport the sloping portions of the mat should be tight enough to conduct the current over top of the pipeline.

The mat may be made of many different kinds of material. In the following, 4 different groups of structures will be mentioned:
1) Mats consisting of at least one layer of sheet material
2) Mats of blocks bonded together by sheet, net and/or ties
3) Combinations of 1) and 2)
4) Mats of scrapped tyres.

re 1): The sheet may be elastic, and made of for example neoprene or natural rubber, and/or plastic, e.g. polypropylene, polyethylene, nylon, etc., or made of natural fibres, i.e. sisal, hemp, etc.
To increase the weight of the mat, it may be built up as a sandwich structure including for instance water-absorbent rubber- or plastic-foam, or composed of a mixture of suitable fill material, e.g. sand, and rubber, plastic, bitumen or the like. To increase the strength, the sheet may be reinforced with for instance steel, nylon or other plastic, in at least one direction.

A sheet that has too little weight to be stable has to be anchored in the seabed, or fastened to the pipeline, either by means of the pinching effect of the embracing portion of the sheet itself, cf. Fig.3, or by means of clamps. Or the mat may be weighted by naturally (Figs. 1-3) or artificially supplied sediment.
In the latter case the sediment may be enclosed in the space between two layers of sheet forming a closed bag 38, Figs.4 and 5, which may be divided into compartments by transversely and/or longitudinally extending secondary walls. Alternatively, the bag may be filled with for instance balls or longitudinally extending rolls or pipes of concrete or plastic, of foam-rubber or -plastic, or other fill material. Transversely and/or longitudinally extending,horizontal and/or oblique stays, e.g. positioned as 42 or 43 in Fig.4, may further the function of the mat.

If the bag 38 consists of for instance nylon-reinforced neoprene, the flukes of an anchor having reached somewhere underneath the bag 38, will easily slip over the bag because of the loose fill material and the smooth underside of the bag.

To further the tendency of a sheet to fold as a roll in case of an anchor hooking its edge, the sheet appropriately is structured as shown in Figs. 8, 9 and/or 10. The longitudinally extending notches 44, slits 45 and/or channels 46 all ease the upward concaving of the sheet.

In stead of arranging 44, 45 or 46 in the sheet itself, they may be placed in possible transversely extending thickened parts of the sheet, or in separate beams of a different material.

A sheet divided in longitudinally extending bands/of 19 relatively rigid material connected by flexible material will tend to fold like an accordion. The tendency may be enhanced by placing the connections/49 alternately at the upper and lower surfaces of the rigid bands, Fig. 14.

re 2): The preferred material for fabrication of blocks is concrete. But also other materials may be used. To facilitate laying of a mat of blocks, the weight may be reduced by use of light weight concrete, or even a special water-permeable concrete containing cavities or pores that will fill with water after the laying. To delay such absorption of water, the blocks may be coated with some soluble material, e.g. cellulose.

The individual block may be shaped for instance as a cube, a box 22, Fig. 12, a parallelepiped 19, Figs.13, 14, a trapezoid 20, Fig.11, a ball 18, Figs.19, 21, a roll 2, Figs.16-18, 22, a double cone 21, Figs.20, 21, an ellipsoid,or other shape.

Elongate blocks are placed parallel with the edge of the mat, and preferably with staggered ends.

The blocks being placed close together, the upper edges parallel with the pipeline of box-shaped blocks 22 may be cut off as shown in Fig.12. The edge portion of the mat forming the center of the roll formed by a hooking anchor, the angle $\alpha$, Figs. 11 and 12, between neighbouring blocks may gradually decrease from a maximum at the edge to a minimum at the centerline of the mat. If the strength of the mat allows therefore, $\alpha$ may be so small that the roll of mat becomes tube-formed, with a larger diameter than that of the corresponding solid roll.

If the upper surface of a block is not covered by a sheet, the upper part of the block preferably should be rounded, Figs.16-22, to prevent the anchor flukes from catching hold.

To make up a quite even outer surface of the roll of mat, the underside 0001161 .23, Fig.11, of the blocks may be rounded. The radius of the circular underside should gradually decrease toward the edges of the mat.

The blocks may be interconnected by one or two sheets 25, by a net 29, and/or by ties 5 and 6, fastened to the blocks at their upper or lower surfaces and/or at a level somewhere between these surfaces. To prevent upward convexity of the mat, in particular along its edges, the connecting members between the blocks 22, Fig.12, or 24, Fig.22, depending on their shape may be placed above their underside (Fig.12) or above their centerline (Fig.22).

The connecting material in one and/or the other direction of the mat may be elastic and consist of for instance neoprene or natural rubber and/or be plastic and consist of for instance polypropylene, polyethylene, nylon or natural fibre material.

Fig.15 shows a mat consisting of ball- or roll-shaped blocks enclosed between two layers of sheet 25 of for instance neoprene or plastic, which may be interconnected by longitudinal walls 26. The upper layer of sheet may be reinforced or fortified in direction perpendicular to the pipeline. The lower layer may be un-reinforced and made of for instance neoprene that can elongate in both directions. Besides the balls or cylinders, the space between the two layers may be filled with smaller balls or cylinders or some kind of fill material, e.g. sand. Appropriately the diameters of the balls or cylinders gradually decrease toward the edges of the mat, to ease the formation of a roll of mat, if an anchor hooks the edge. Ball- (Fig.19), double cone- (Fig.20), or ellipsoid-shaped blocks for maximum diameter of a roll of a hooked portion of mat, at a minimum volume of block material, may be interconnected by means of a flexible casing 27 or 28 enclosing the blocks. The diagonally (Figs.19 and 20) or rectangular shaped casing may be made of flexible materials such as plastic, neoprene, etc., and/or flexibly connected rigid materials such as plastic, neoprene, concrete, aluminium, etc. In one or the other direction the casing may be elastic so as to allow for insertion of the blocks 18 or 21 into the compartments of the casing, and for elongation of the mat in case an anchor hooks its edge. Without other means than the casing 27 or 28 to hold the blocks, these may be pressed out of their compartments and act as rollers in case an anchor hooks the mat. In addition to the casing, the blocks may be interconnected by transverse and/or longitudinal ties, which may be elastic. The ties may be attached to the surface of the blocks or pass through channels in these.

8

0001161

To ensure a continuous, even surface of a mat of roll-shaped blocks 2, Figs.16-18 and 22, even on a rugged seafloor, the joints between adjacent blocks may be spherical, so that one end of the individual block is formed as a concave half sphere, the other end as a convex half sphere fitting into the concave end of the adjacent block.

Appropriately the joints are provided with couplings. These may be double-convex (Fig.17), plane (Fig.18) or double-concave. Each transversely extending line of disk-shaped couplings (Fig.18) may be formed as one continuous plate made of flexible material, e.g. neoprene or polypropylene. The outer periphery of each disk follows the contour of the roll 2, and the disk includes a channel 7 for the tie 5. Alternatively, at least part of each transverse line of couplings, in particular at either edge of the mat, may be divided in shorter sections overlapping eachother. If each section couples only two adjacent blocks, it may be made of rigid material, e.g. plastic or metal.

To protect the ropes 5 from damage and/or to prevent too large mutual vertical displacement between adjacent blocks, each joint may contain a longitudinally extending tube 31, Fig.18, of resistable material enclosing the rope 5. The tube may be continuous over the total length of the rope or be sectioned on either side of each joint, or may form part of the block 2. At least the peripheral part of the tie 5 may be reinforced with resistable material.

Ball-shaped couplings 3 provide continuity of the surface of a mat of roll-shaped blocks, even if the seabed is uneven, Fig.18. The couplings 3 are in transverse direction connected by continuous tie means 6 cast into or passing through channels in the couplings. In the longitudinal direction they are connected by the tie means 5 passing through channels 7 in the blocks and couplings. Suitable materials for fabrication of the ties 5 and 6 are for instance neoprene, natural rubber, polypropylene, aromatic polyamide coated with a harder wearing material, and/or nylon or other materials. The elasticity of 5 and/or 6 may increase more or less gradually toward the edges of the mat.

The distance between neighbouring couplings and thereby the rolls 2, and/ or the diameter of the rolls, may vary over the width of the mat. To ease the formation of a roll of a hooked portion of mat, this distance may gradually increase, and the diameter of 2 and 3 decrease, toward the edges of the mat. In order to tighten the mat, so that it can conduct the water current over top of the pipeline, Fig.22, the said distance appropriately is nil in the two sloping portions of the mat. These two portions may also

0001161

be tightened by puttying the spaces between adjacent rolls 2 with an appropriate kind of plastic substance. Alternatively, a tight flexible sheet made of for instance neoprene may be attached to one or the other side of the mat of concrete blocks, which in these sloping portions of the mat may be cylindric or have other shape. If blocks within the two portions are not needed to obtain a sufficiently large diameter of roll of a hooked portion of mat, the said two portions may also consist of water-tight sheet made of for instance neoprene, only.

re 3): Fig. 5 shows one example of a combination of 1) and 2): The center portion 38 of the mat may consist of two layers of sheet material forming a bag filled with for example sedimentary material. The horizontal edge portions may consist of mats of blocks.

In another example mentioned above the sloping portions of the mat consist of a single layer of impermeable sheet material, and rest of the mat is made up of interconnected blocks.

re 4): To obtain a cheap mat and at the same time solve an environmental and waste problem, the mat may be made of scrapped tyres tied together as shown in Fig.23. The orientation of the plane of the individual tyre may be vertical, oblique or horizontal to fill out the desired profile of the cover. One appropriate combination is shown in Fig. 23 where the underside of the sloping portions of the mat 33 are provided with a row of vertical tyres 34 on either side of the pipeline. Loose tyres may be placed underneath or on top of the mat 33.

In areas with risk of dropped objects hitting the installation, e.g. a pipeline near an offshore platform, the impact of such collision may be alleviated by means of fenders, for instance the existing types of rubber fenders, or scrapped tyres, placed on top of the installation. The fenders may be placed underneath, e.g. in the form of a half tube of rubber embracing the upper part of the pipeline, and/or on top of the protective mat, and/or form part of this. In Fig.22 the rolls 11 may be made of rubber and possibly have larger diameters than the rolls 2.

To minimize the friction between a hooking anchor and the mat, and to prevent anchors and fishing gear from catching hold of the mat, either before or after having slipped over the roll of mat possibly formed, the lower and/or the upper surface of the mat - whether it consists of neoprene, concrete or other material - and of the edge 4 may be lubricated with a water-repellent grease.

To even further reduce the friction between anchor and mat, the edge 4 Figs.1-7,22, and/or the underside of the mat may be supplied with rollers 37, Fig.8. On a sheet-type mat consisting of for instance neoprene, the rollers may for example consist of continuous, longitudinally extending rolls of neoprene or plastic, possibly reinforced, which are so weakly welded to the sheet, that they will be rubbed off the sheet and function as rollers by a hooking anchor. On a block-type mat the rollers may consist of concrete rolls that are weakly tied to the mat.

In a roll-type of mat as shown in Fig.22 the ties 5 and/or 6 may be so elastic that they allow for the individual roll to leave its normal position between two couplings and function as roller between anchor and roll of mat.

Before the laying of a mat, it may be wound up from either edge to form two parallel longitudinal rolls, Fig.24. Compared with laying of an unrolled mat, winding up before lowering it to the seabed has the advantages that the hydraulic resistance during lowering is minimized, and that the stability of elastic edge portions of the mat during the lowering will be improved, because the weight of edge portion in each roll will be transferred to the possibly less elastic longitudinal ties 5 at the center portion of the mat.

From a lay barge the two rolls may be laid on top of the pipeline and unrolled to both sides. On the laybarge the mat may be wound automatically by means of two vertical longitudinally extending edge frames with at least half-circular cross-section embracing the edges of the mat. The two frames converging downwards toward the seabed will make both side portions wind up toward the middle of the mat, to form two parallel rolls close together. Correspondingly the unrolling of the rolls on the seabed may be achieved by means of a frame that in plan view is triangular. The foremost vertex of the frame trails on top of the mat on top of the pipeline some distance behind the surface vessel to which it is connected by a line. The two other vertexes of the triangular frame symmetrically positioned on either side of the pipeline move on the mat and like a snow plough spread the two rolls of mat away from eachother and thereby unroll them.

A mat of blocks in its full width may be wound around a large drum-formed reel 15, Figs.25-26, and be lowered continuously to the seabed, hanging from the drum, which rotates floating on the surface or mounted on a surface vessel.

To lay a rolled or unrolled mat symmetrically over the pipeline, a manned or unmanned selfpropelled underwater vehicle that roll on wheels 13, Figs. 25-26, or "walk" on feet or runners on the seabed is appropriate. The vehicle on its both sides should be supplied with upwardly extending frames and/or the above type of device for unrolling the mat and move along the pipeline ahead of the down-coming mat.

In a preferred third alternative laying method, one or two vehicles 12, Figs.25-26, interconnected by transverse beams 14, of one of the above types of manned or unmanned selfpropelled vehicles supplied with various sensor systems to be controlled from a surface vessel 17 through an umbilical cable 18, move along both sides of the pipeline, carrying a large drum-formed reel 15 as described above. A long length of mat 16 is wound around the drum and will then be laid very accurately over the pipeline 1 as the vehicle(s) move forward. The vehicles may have capacity to carry at least two drums at a time, so that the shifting of the emptied drums with loaded drums from the surface vessel 17 can take place continuously without too long interruptions.

To compensate for the variations of the load on the drum, accordingly as the mat 16 is wound off the drum, water may be let into the air-filled drum. This balancing may be automatic. The volume of water in the drum may for example be regulated by the pressure exerted by the drum on its bearings. The pressure in the cylinder of a hydraulic pressure cell inserted between axle and bearing may be transmitted hydraulically to controll the valves regulating the content of water in the drum. The valves being kept open by spring means, until the transmitted pressure due to the increasing weight of the water let into the drum closes the valves at a certain preset critical pressure, the total weight of the drum will be kept constant.

A fourth alternative method of installing the mat comprises sectioning the mat into shorter sections and lowering each section in rolled or unrolled state to the seabed, where the sections should overlap eachother. During the lowering, each section is hanging from a frame extending the length of the section.

0001161

C L A I M S :

1. A system for protection of an installation on the floor of a body of water, comprising a flexible mat having a center portion which, in use, covers said installation, and side portions each edge of which, in use, rests on the floor a distance of at least one time the height of the installation away from the periphery of the installation, said edge being so thick and rigid that the mat will form a roll, or fold like an accordion, in case a dragging anchor hooks the edge of the mat.

2. A system according to Claim 1, wherein said side portions slope continuously from said center portion to said edges.

3. A system according to Claim 1, wherein adjacent to said center portion the innermost portion of each of said side portions slopes away from said installation to meet the floor, from where the outermost portion of said side portion rests on and follows the contour of the floor.

4. A system according to Claim 1, wherein adjacent to said center portion the innermost portion of each of said side portions extends generally vertically downwards to the floor, and wherein the resting portion of said side portion follows the contour of the floor.

5. A system according to any preceding claim, wherein the thickness and rigidness of said edges is obtained by means of upwardly or downwardly twisted loops of the edges.

6. A system according to any preceding claim, wherein the thickness and rigidity of said edges is obtained by attaching lateral tubes to the edges, said tubes being thicker than said mat.

7. A system according to Claim 6, wherein said tubes consist of elastic material.

8. A system according to Claim 6 or 7, wherein said tubes are reinforced with one or more spirals of wire with one or more different pitches.

9. A system according to Claim 6, 7 or 8, wherein the surface of said tubes is provided with longitudinally extending projections.

10. A system according to any preceding Claim 6, 7, 8 or 9, wherein said tubes are sectioned and have telescopic joints.

11. A system according to any one of the Claims 6 - 10, wherein at least parts of said tubes are perforated.

12. A system according to any preceding claim, wherein at least part of said mat is elastic.

13. A system according to Claim 12, wherein the elasticity in at least one direction of the mat varies from middle to edge of the mat.

14. A system according to Claim 13, wherein the elasticity in at least one direction of the mat gradually increases toward the edges of the mat.

15. A system according to any preceding claim, wherein at least part of said mat contains perforations.

16. A system according to Claim 15, wherein all but the sloping parts of the mat contain perforations.

17. A system according to any preceding claim, wherein at least part of said mat consists of at least one layer of elastic and/or plastic material.

18. A system according to Claim 17, wherein at least part of said sheet parallel with its edge is provided with notches and/or slits and/or channels and/or stays.

19. A system according to Claim 18, wherein said stays are sectioned, and wherein the length of the individual section of stay gradually decreases toward the edge of the mat.

20. A system according to Claim 18 or 19, wherein said stays are placed in channels without longitudinally binding association with these.

21. A system according to Claim 17 or 18, wherein at least part of said sheet parallel or perpendicular to its edge is thickened in parallel strips.

22. A system according to Claim 17, 18 or 19, wherein at least part of said sheet parallel with its edge consists of parallel bands which are mutually connected alternately at their upper and lower surfaces.

23. A system according to any preceding claim, wherein at least part of said mat consists of at least two layers of elastic and/or plastic sheet material forming at least one closed space which is filled with sedimentary material and/or balls and/or rolls and/or stays parallel with or perpendicular to said edge of said mat.

25. A system according to any preceding claim, wherein at least part of said mat consists of blocks interconnected by sheet and/or net and/or ties of elastic and/or plastic and/or rigid material attached at their upper and/or lower surfaces and/or somewhere between these surfaces.

26. A system according to Claim 25, wherein said sheet, and/or net and/or or ties connecting said blocks in the direction perpendicular to and located in the edge portions of said mat, are attached to the upper parts of said blocks.

27. A system according to Claim 26 or 27, wherein the shape of said blocks comprises at least one of the following configurations: cubes,

14 0001161

boxes, parallelepipeds, trapezoids, balls, rolls, double cones, ellipsoids.

28. A system according to Claim 25, wherein said blocks in their mutual joints are interconnected by couplings.

29. A system according to Claim 28, wherein the shape of said couplings comprises at least one of the following configurations: double convexes, plates, double concaves.

30. A system according to Claim 27 and 29, wherein said blocks are shaped as rolls parallel with the edge of said mat and joined together by double-convex and /or double-concave couplings fitting into the concave, respectively convex ends of the rolls.

31. A system according to Claim 30, wherein the parallel rows of said roll-shaped blocks in the sloping portions of said mat are kept tight together, whereas in the rest of said mat the rows of blocks are spaced sufficiently to allow for a vertical flow af water through the mat.

32. A system according to any one of the Claims 25-31, wherein said blocks are interconnected by ties parallel and/or perpendicular to the edge of said mat, the ties fitting into channels in said blocks and/or said couplings.

33. A system according to any preceding claim, wherein the sloping portions of said mat consist of at least one layer of impermeable sheet material, and the edge portions consist of interconnected blocks.

34. A system according to Claim 33, wherein said sloping portions of said mat consist of two layers of impermeable sheet material to form at least one closed space filled with sedimentary material.

35. A system according to any preceding claim, wherein at least part of said mat consists of interconnected scrapped tyres.

36. A system according to Claim 35, wherein the sloping portions of said mat are supported on rows of vertically positioned scrapped tyres attached to the underside of said mat.

37. A system according to Claim 35 or 36, wherein said mat is supplemented with loose scrapped tyres on top of and/or beneath said mat.

38. A system according to any preceding claim, wherein at least part of the lower and/or upper surface of said mat and/or its edge is lubricated.

39. A system according to any preceding claim, wherein at least part of the edge and/or the underside of said mat is supplied with rollers parallel with the edge of the mat.

40. A method of laying the system according to Claim 1, wherein said mat is wound up to form two parallel rolls which before the positioning of

the installation to be protected, are placed on top of this, and after the positioning are unrolled on the floor of the body of water.

41. A method of laying the system according to Claim 1, wherein said mat before the laying, sectionwise is wound around a reel which thereafter is placed on at least one underwater vehicle, the mat winding off the reel and settling over said installation as the vehicle moves along this.

42. A method according to Claim 41, wherein said vehicle is unmanned, selfpropelled and remotely controlled from a mothership.

43. A method according to Claim 41 or 42, wherein the reduction of weight on said reel due to the winding off of said mat, automatically is balanced by gradual filling of the reel with water.

44. A method according to Claim 43, wherein the valves regulating the content of water in the reel are controlled hydraulically by the pressure between the axle of the reel and its bearings, said valves being kept open by spring means until the weight of the water let into the reel creates a certain critical pressure between the axle and its bearings.

Fig.1   Fig.2   Fig.3   Fig.4   Fig.5   Fig.6   Fig.7   Fig.8   Fig.9   Fig.10   Fig.11   Fig.12   Fig.13   Fig.14   Fig.15   Fig.16   Fig.17   Fig.18

Fig.19  III  18  27  III

Fig.20  IV  21  IV  28

Fig.21  18 or 21  27 or 28

Fig. 22  1  10  9  11  8  4  2  24  1  2  4

Fig.23  33  1  34

Fig.24  36  35  1

Fig.25  17  15  15  16  18  V  16  15  16  1  13  12  V

Fig.26  16  15  12  12  13  16  1  14

O. Fjord Larsen

| Category | Citation of document with indication, where appropriate, of relevant passages | Relevant to claim |
|---|---|---|
| | FR - A - 2 122 164 (LARSEN)<br>* Page 4, line 5 - page 5, line 18; figures * | 1 |
| | -- | |
| | US - A - 3 779 027 (MURPHY)<br>* Column 4, lines 35-39; figure 8 * | 1 |
| | -- | |
| | FR - A - 2 296 733 (LARSEN) 30-07-1976<br>* Page 5, line 13 - page 6, line 29; figures * | 1 |
| | -- | |
| | FR - A - 2 019 525 (COLLINS-AIKMAN CORP.)<br>* Page 1, lines 20-27; figures * | 1 |
| | -- | |
| E | FR - A - 2 367 243 (THEAULT) 05-05-1978<br>* Figures * | 1 |
| | -- | |
| E | FR - A - 2 356 770 (LARSEN) 27-01-1978<br>* Page 4, line 29 - page 5, line 5, figures 2,3 * | 1 |
| | ---- | |

**DOCUMENTS CONSIDERED TO BE RELEVANT**

**CLASSIFICATION OF THE APPLICATION (Int. Cl.²)**

F 16 L 1/04
E 02 B 3/12

**TECHNICAL FIELDS SEARCHED (Int.Cl.³)**

F 16 L
E 02 B
E 02 D
H 02 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims